# EUROPÄISCHE PATENTANMELDUNG

(11) **EP 1 496 457 A1**
(43) Veröffentlichungstag der Anmeldung: **12.01.2005**
(21) Anmeldenummer: 03015466.0
(22) Anmeldetag: 09.07.2003
(51) Int. Cl.: G06F 17/60

(54) **Verfahren und Vorrichtung zur Darstellung multimedialer Inhalte mit einem Datenträger**

(71) Anmelder: Maulhardt, Rolf, 31787 Hameln (DE); Walzinski, Klaus, 31785 Hameln (DE)
(72) Erfinder: Maulhardt, Rolf, 31787 Hameln (DE); Walzinski, Klaus, 31785 Hameln (DE)
(74) Vertreter: Söffge, Karen

(57) **Zusammenfassung**

Mit der vorliegenden Erfindung wird ein Verfahren und eine Vorrichtung mit einem Datenträger (1) vorgestellt, insbesondere einer CD mit digitalen Daten multimedialen Inhalts, wobei die digitalen Daten Anweisungs-Signale beinhalten, die in ihrer technischen Gesamtheit Bilder und Schriftzeichen auf dem Bildschirm eines herkömmlichen Lesegerätes (2), z.B. eines Computers oder DVD-Players, erzeugen und in ihrer Zusammenstellung eine Anleitung zum bestimmungsgemäßen Gebrauch von Artikeln führen. Dabei spielen die bewegten Bilder und Schriftzeichen von realen und virtuelle Personen, Landschaften und Produkten eine besondere Rolle, was mittels einer speziellen Steuerung des Lesegrätes (2) bewirkt wird.

## Beschreibung

Die vorliegende Erfindung befasst sich mit einem Verfahren und mit einer Vorrichtung mit einem Datenträger multimedialen Inhalts, insbesondere mit einem Datenträger, der bewegte Bilder und Schriftzeichen auf dem Bildschirm eines Computers wiedergibt.

Derartige Datenträger sind im Stand der Technik aus der DE 198 01 673 A1 bekannt. Dieser Druckschrift ist zu entnehmen, dass Texte verschiedener Wissensbereiche auf CD-ROM bzw. DVD oder andere Speichermedien zu speichern sind, um sie später bei Bedarf für bestimmte Anwendungen mehrmals zu rekapitulieren, oder im Falle eines Sachbuches dieses von Zeit zu Zeit zu aktualisieren oder zu ändern, ohne das gesamte Buch neu zu schreiben.

Bei Katalogen beispielsweise wird es im Allgemeinen als nachteilig empfunden, dass sie die einzelnen Artikel zwar gut beschreiben, aber nicht in der Weise, die der Endverbraucher gern hätte, um sich ein umfassendes Bild von dem angebotenen Artikel machen zu können, damit seine Entscheidung zum Kauf des Artikels erleichtert wird. Der Anwender ist daher oftmals gezwungen, sich selbst in zeitraubenden Vorversuchen ein Bild von den wohlgemeinten Vorstellungen des Beschreibenden zu machen.

Daher ist es Aufgabe der vorliegenden Erfindung, einen Katalog mit multimedialen Mitteln bereitzustellen, der einfach in der Handhabung ist und dem Endverbraucher ein umfassendes anschauliches Bild der angebotenen Artikel zu vermittelt.

Diese Aufgabe wird mit den kennzeichnenden Merkmalen der Hauptansprüche gelöst.

Weitere erfindungswesentliche Merkmale sind den Unteransprüchen zu entnehmen.

Das erfindungsgemäße Verfahren zur animierten Darstellung von Katalogen mit einem Datenträger mit digitalen Daten mültimedialen Inhalts; wobei die digitalen Daten des beliebigen Datenträgers Anweisungs-Signale beinhalten, die in ihrer technischen Gesamtheit bewegte Bilder und Schriftzeichen auf dem Bildschirm eines herkömmlichen Lesegerätes, z.B. eines Computers erzeugen, ist dadurch gekennzeichnet, dass die bewegten Bilder und Zeichen reale und virtuelle Gegenstände und Personen, wie Landschaften, Imobilien und Dienstleistungen wiedergeben und durch eine erfindungsgemäße Steuerung des Lesegerätes vorbestimmte Datenbereiche des digitalen Datenträgers zur Darstellung graphischer Abläufe durch ein interaktives Signal beliebig oft wiederholbar macht. Das besondere an dieser Darstellungsart eines Kataloges ist es, dass dem Betrachter bzw. dem Endverbraucher eine umfassende und verbesserte Information über das entsprechende Produkt in die Hand gegeben wird, um bei seiner Entscheidungsfindung die Wahl zu treffen, die seinen Vorstellungen am nächsten kommt. Dies ist sowohl für den Verbraucher als auch für den Anbieter von Vorteil.

Vorteilhaft sind Datenträger, dessen multimediale Daten mit Hilfe eines geeigneten Lesegeräts ausgelesen werden können, wobei die gespeicherten multimedialen Daten eines Katalogs alle Informationen, wie Städte- und Landkreis- Landes- und Präsentationen von Regionen, europäische oder weltweite Projekte, Immobilien, Gärten, Behörden, Banken und Anlagefirmen, sowie Sportveranstaltungen, Zirkus o. ä. beinhalten, deren Anwendung nicht ohne weiteres erkennbar ist und durch bewegte Bilder zusammen mit jeder beliebigen Sprache verdeutlicht werden.

Das der Erfindung zugrunde liegende Verfahren zur Verdeutlichung der Angebote in einem sonst leblosen Katalog auf einem allgemein zugänglichen Datenträger ist neu und verspricht eine hohe Akzeptanz bei dem Endverbraucher. Die Handhabung von derartigen Katalogen hebt sich dadurch hervor, dass die Kataloge mit jedem herkömmlichen Lesegerät ausgelesen werden können, das in naher Zukunft allen Haushalten zur Verfügung stehen wird. Die Tatsache, dass der entsprechende Katalog auf einem Datenträger audio-visuell gespeichert wird und mit Hilfe eines speziellen Steuerprogramms im Lesegerät ausgelesen wird, macht die Erfindung für den Anwender besonders attraktiv.

Die Lesegeräte, für die die digitalen Daten auf dem Datenträger anzuwenden sind, werden erfahrungsgemäß elektrisch, mechanisch, elektro-mechanisch, durch Wind oder durch Wasser oder durch Strahlung betrieben. Dabei ist es selbstverständlich, dass die Behältnisse mechanisch aufgebaut sind.

Das Lesegerät, mit dem die gespeicherten multimedialen Daten vom Datenträger herausgelesen werden, ist beispielsweise ein Computer oder Videorecorder oder DVD-Player.

Vorteilhaft ist es ferner, die auf dem Datenträger gespeicherte multimedialen Daten eines Katalogs mit Hilfe eines Steuerprogramms anzusteuern; so dass die verschiedenen Schritte gezielt und einzeln auslesbar sind, wodurch jeder Gedankengang beliebig oft wiederholt werden kann. Dabei ist es zweckmäßig, dass das Steuerprogramm unabhängig von dem jeweiligen Katalog im Lesegerät gespeichert ist und jeder Katalog, der mit dem Steuerprogramm verwendet werden soll, nur mit einer verschlüsselten Codierung als Zugang zum Programm versehen ist.

Ferner ist es vorteilhaft, die einzelnen Schritte in den multimedialen Daten audio-visuell wiederzugeben und bei Bedarf mit kurzen Sätzen im Animations-Bild auf dem Monitor des Wiedergabegeräts zu untermauern.

Als Datenträger kommen im Prinzip alle elektronischen Speichermedien in Frage, insbesondere CD-ROM, DVD, Smart-Cards, ZIP-Disc und Magnetbänder.

Von großer Wichtigkeit für die vorliegende Erfindung ist es, dass der Datenträger, in welcher Form er auch vorliegen mag, auf CD-ROM zu überspielen, da durch die Kompatibilität der Datenträger der Einsatz im DVD-Player ermöglicht wird. Große Präsentationen, z.B. Versandhauskataloge mit 1500 Seiten werden somit vorteilhaft auf DVD Datenträger mit großer Speicherkapazität aufgenommen, wobei die Besonderheit der bewegten Bilder in einem Katalog besonders attraktiv ist. Durch Hinterlegen der Sprache und des Tones kann durch Anklicken der Landesfahne die jeweilige Sprache ausgewählt werden, was hauptsächlich zur Internationalisierung beiträgt.

Vorteilhaft ist es auch, das Steuerprogramm und/oder die multimedialen Daten im Internet auf der Homepage eines Betriebes in Verbindung mit dem jeweiligen Gegenstand zur Verfügung zu stellen, um dem Anwender Gelegenheit zu geben, bei Verlust des Datenträgers mit den entsprechenden Daten diese neu herunterzuladen und Korrekturen in dem Datensatz leicht vorzunehmen. Das Herunterladen eines derartigen Steuerprogramms bzw. einer Gebrauchsanweisung ist jedoch nur mit Zustimmung des Betriebes der Homepage bzw. mit Zustimmung des Lizenzgebers der vorliegenden Erfindung möglich.

Vorteilhaft ist es ferner, dass das Steuerprogramm mit dem Anbieter eine Internetverknüpfung-herstellt, sobald der Anwender durch "Klicken" auf einen vorbestimmten Button im Programm dies zu erkennen gibt.

Ferner ist es vorteilhaft, dass durch die Internetverknüpfung mit dem Anbieter automatisch ein e-mail-Fenster auf dem Bildschirm geöffnet wird, in welchem Bestellungen, Nachbestellungen, Reklamationen bzw. fehlender Teile bei der "Hotline" des Herstellers vorgenommen werden.
Für manche Anwendungsfälle ist es vorteilhaft, die Bilder in der Präsentation dreidimensional darzustellen. Dabei können Listen zusammengestellt werden, die dem Anwender die Möglichkeit eröffnen, in Ruhe vor dem Bildschirm die Gegenstände entsprechend seinen Bedürfnissen auszusuchen.

Vorteilhaft ist es auch, den in der Verpackung eines zu verkaufenden Gegenstands beiliegenden erfindungsgemäßen Datenträger mit einem Kopierschutz herkömmlicher Art zu versehen.

Ferner ist es vorteilhaft, den Katalog mit Werbung jeglicher Art zu versehen, wie beispielsweise Anzeigen von Werbeträgern oder Präsentationen von Produkten oder Firmenprofilen, wozu selbstverständlich die Zustimmung des Urhebers notwendig ist.

Im nun Folgenden wird die Erfindung anhand der Zeichnungen im Detail näher erläutert. Es zeigt
- Fig. 1: ein Blockdiagramm, das schematisch die wesentlichen Komponenten der vorliegenden Erfindung wiedergibt;
- Fig. 2: ein allgemeines Flußdiagramm der Daten zur audio-visuellen Darstellung des multimedialen Inhalts der Datenträger (1).

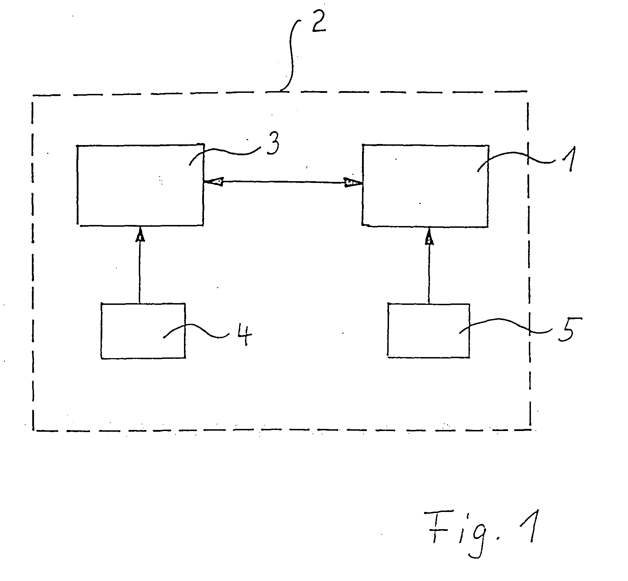

In Fig. 1 ist mit der gestrichelten Linie das Lesegerät 2, mit dem das Speichermedium gelesen oder abgespielt wird, symbolisiert. Das Lesegerät 2 ist jeweils ein herkömmliches Gerät, mit dem der entsprechende Datenträger ausgelesen wird.

Für den Fall, dass die multimedialen Daten auf einer CD-ROM gespeichert sind, ist zum Auslesen der CD-ROM ein CD-Laufwerk und ein Computer notwendig. Für das Auslesen eines Magnetbandes beispielsweise ist ein kommerzieller Videorecorder geeignet. Im vorliegenden Ausführungsbeispiel der Erfindung wird zunächst ein Steuerprogramm 3 im Speicher des entsprechenden Lesegeräts 2 gespeichert. Das Steuerprogramm 3 ist der Art ausgelegt, dass es jeden beliebigen Datensatz (Katalog) unterschiedlicher Gegenstände ansteuern kann, wobei die Ansteuerung nur mit einer verschlüsselten Codierung vorgenommen werden kann. Die verschlüsselte Codierung kann jede Art einer Datensicherungscodierung entsprechen.

Nachdem ein Steuerprogramm im Lesegerät gespeichert ist, wird der Datenträger 1 dem Lesegerät 2 zugeführt und vom Steuerprogramm 3 mit der entsprechenden verschlüsselten Codierung angesteuert. Der Datenträger 1 wurde vorher auf beliebige Weise mit den multimedialen Daten 5 (Katalog) beladen, was für den Fall einer CD-ROM durch Einbrennen der Daten des Katalogs oder der Präsentation mit einem herkömmlichen Brenner vorgenommen wird. In gleicher Weise wird die Speicherung der Daten 5 des Katalogs oder allgemeinen Präsentation entsprechend bei anderen Speichermedien durchgeführt. Sobald das Steuerprogramm 3 und der Datenträger 1 dem Lesegerät 2 zugeführt wurde, werden die Daten aus den Programmen zwischen dem Datenträger 1 und dem Steuerprogramm gegenseitig ausgetauscht. Mit der Tastatur 4 oder einem anderen interaktiven Steuerungsmittel des jeweiligen Lesegeräts 2 wird dem Steuerprogramm 3 gesagt, welcher Schritt in dem Katalog vorgeführt bzw. angezeigt werden soll.

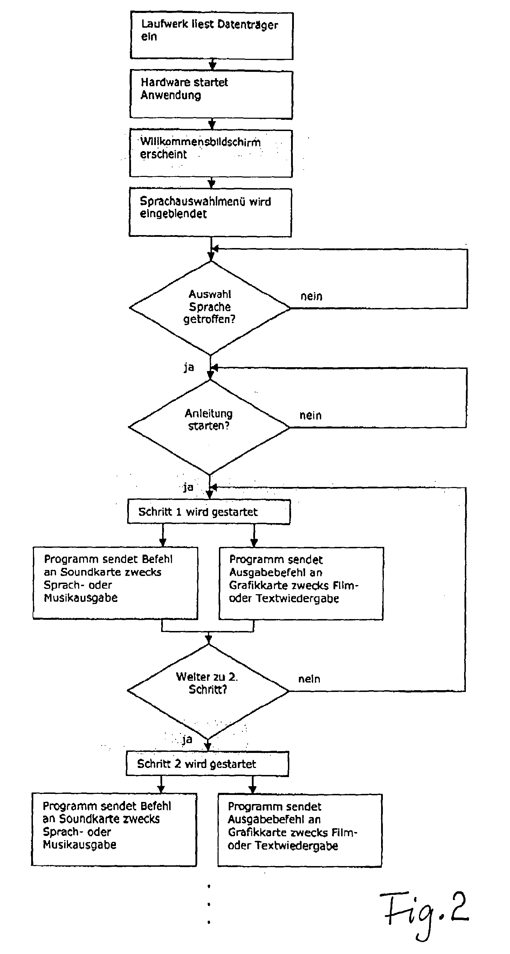

In Fig. 2 ist ein allgemeines Flußdiagramm der Daten des Datenträgers 1 zusammen mit dem Steuerprogramm 3 im Lesegerät 2 dargestellt. Der Datenträger 1 enthält die multimedialen Daten, die vor der Herstellung des Datenträgers 1 aus einer Vielzahl von Unterprogrammen zusammengestellt wurden und dann mit einem geeigneten Compiler (z.B. Mediator) so aufbereitet werden, dass sie unabhängig vom Betriebssystem in jedem herkömmlichen Anzeigegerät in nun folgenden Schritten abgespielt werden können: Nachdem der Datenträger 1 in das Lesegerät 2 eingelegt ist, wird durch ein internes Signal die gesamte Hardware zur Darstellung des multimedialen Inhalts des Datenträgers 1 gestartet, wobei nach einem bestimmten Zeitintervall mit einem interaktiven Signal die weiteren Schritte im Programm wahlweise gestartet werden und entsprechend der getroffenen Wahl das Programm automatisch die jeweiligen Hardwarekomponenten ansteuert, was im ersten Schritt (Schritt 1) durchgeführt wird. Der Zugang zu diesem Datenfluß ist u.a. möglich, wenn das Steuerprogramm 3 vorher im Lesegerät 2 implementiert ist. Im Schritt 2 ist zu entscheiden, welchen Teilbereich der multimedialen Daten der Anwender auswählen will, wodurch die entsprechenden Hardwarekomponenten (z.B. Soundkarte und/oder Grafikkarte) ein Starsignal erhalten, so dass der Datenfluß kontinuierlich bis zum nächsten Programmstop fortgeführt wird.

## Patentansprüche

1. Verfahren zur animierten Darstellung von Katalogen mit einem Datenträger (1) mit digitalen Daten multimedialen Inhalts, wobei die digitalen Daten des beliebigen Datenträgers (1) Anweisungs-Signale beinhalten, die in ihrer technischen Gesamtheit bewegte Bilder und Schriftzeichen auf dem Bildschirm eines herkömmlichen Lesegerätes, z.B. eines Computers erzeugen, **dadurch gekennzeichnet, dass** die bewegten Bilder und Zeichen reale und virtuelle Gegenstände und Personen wiedergeben und durch eine Steuerung (3) des Lesegerätes (2) vorbestimmte Datenbereiche des digitalen Datenträgers zur Darstellung graphischer Abläufe durch ein interaktives Signal beliebig oft wiederholbar macht.

2. Verfahren nach Anspruch 1 zur audio-visuellen Wahrnehmung von Katalogen, **dadurch gekennzeichnet, dass** die multimedialen Daten mit Hilfe einer Vielzahl von Unterprogrammen zusammengestellt und einem Compiler zugeführt werden, in dem, zusammen mit einem Steuerprogramm (3), die Daten derart compiliert werden, dass sie unabhängig von der Art und/oder dem jeweiligen Betriebssystem des Lesegerätes(2) sind.

3. Verfahren nach Anspruch 1, **dadurch gekennzeichnet, dass** digitale Daten multimedialen Inhalts auf einem Datenträger (1) gespeichert werden, wobei die digitalen Daten Anweisungs-Signale beinhalten, die in ihrer technischen Gesamtheit mit Hilfe eines Steuerprogramms (3) bewegte Bilder und Schriftzeichen auf dem Bildschirm eines herkömmlichen Lesegerätes (2), z.B. eines Computers, erzeugen.

4. Verfahren nach Anspruch 1, **dadurch gekennzeichnet, dass** ein Steuerprogramm (3) unabhängig von den multimedialen Daten (5) auf dem Datenträger (1) im Lesegerät gespeichert ist und mit einer verschlüsselten Codierung als Zugang zum Programm der multimedialen Daten (5) versehen ist.

5. Verfahren nach Anspruch 1, **dadurch gekennzeichnet, dass** das Steuerprogramm (3) derart aufgebaut ist, dass die multimedialen Daten (5) schrittweise abgefragt werden kann, wobei die einzelnen Schritte in einer Übersichtstabelle am Anfang der multimedialen Daten (5) aufgelistet sind.

6. Verfahren nach einem der vorangegangenen Ansprüche, **dadurch gekennzeichnet, dass** die einzelnen Schritte in den multimedialen Daten (5) beliebig oft wiederholt werden können.

7. Verfahren nach einem der vorangegangenen Ansprüche, **dadurch gekennzeichnet, dass** die einzelnen Schritte in den multimedialen Daten (5) audio-visuell beschrieben werden.

8. Verfahren nach einem der vorangegangenen Ansprüche, **dadurch gekennzeichnet, dass** als Datenträger (1) für die multimedialen Daten (5) und/oder das Steuerprogramm (3) eine CD, DVD, Smart-Card, ZIP-Disc oder Magnetband verwendet wird.

9. Verfahren nach einem der vorangegangenen Ansprüche, **dadurch gekennzeichnet, dass** den multimedialen Daten (5) an geeigneter Stelle Werbung eines Werbeträgers hinzugefügt wird.

10. Verfahren nach einem der vorangegangenen Ansprüche, **dadurch gekennzeichnet, dass** als geeignete Stelle in den multimedialen Daten (5) der Anfang, im Text oder der Rand des Bildschirms herangezogen wird.

11. Verfahren nach einem der vorangegangenen Ansprüche, **dadurch gekennzeichnet, dass** den multimedialen Daten (5) an geeigneter Stelle eine Präsentation einer Firma oder eines Firmenprofils eingeblendet wird.

12. Verfahren nach einem der vorangegangenen Ansprüche, **dadurch gekennzeichnet, dass** das Steuerprogramm (3) eine Internetverknüpfung mit dem Anbieter des Katalogs herstellt, sobald der Anwender durch "Klicken" auf einen vorbestimmten Button dies zu erkennen gibt.

13. Verfahren nach einem der vorangegangenen Ansprüche, **dadurch gekennzeichnet, dass** das durch die Internetverknüpfung automatisch ein e-mail Fenster auf dem Bildschirm geöffnet wird, in welchem Bestellungen, Nachbestellungen und Reklamationen beim Anbieter vorgenommen werden.

14. Anzeigevorrichtung mit einem digitalen Datenträger (1) multimedialen Inhalts, der Daten aufweist, die in Ihrer Gesamtheit bewegte Bilder und Schriftzeichen von Katalogen auf einem Bildschirm eines herkömmlichen Lesegerätes (2), z.B. eines Computers, erzeugen, **ge-kennzeichnet durch** eine Steuerung, der bilderzeugenden Anzeige, die fest im Gehäuse des Lesegerätes (2) installiert ist und vorbestimmte Datenbereiche des Datenträgers (1) zur Darstellung graphischer Abläufe **durch** ein interaktives Signal beliebig oft wiederholbar macht.

15. Anzeigevorrichtung nach Anspruch 13, **dadurch gekennzeichnet, dass** die Lesegeräte (2) zum Auslesen der digitalen Daten multimedialen Inhalts elektro-mechanisch betrieben werden.

16. Anzeigevorrichtung nach Anspruch 13, **dadurch gekennzeichnet, dass** die multimedialen Daten mechanisch aufgebaute Gegenstände darstellen.

17. Anzeigevorrichtung nach Anspruch 13, **dadurch gekennzeichnet, dass** die multimedialen Daten Prospekte, Handzettel, Wurfsendungen, Beilagen, Präsentationen oder Dienstleistungen beinhalten.

18. Anzeigevorrichtung nach Anspruch 13, **dadurch gekennzeichnet, dass** das Lesegerät (2) ein Audio-Videorecorder ist.

19. Anzeigevorrichtung nach Anspruch 13, **dadurch gekennzeichnet, dass** die auf dem Datenträger gespeicherten Daten bewegte Bilder von realen oder virtuellen Personen erzeugen.

20. Anzeigevorrichtung nach Anspruch 13, **dadurch gekennzeichnet, dass** der Datenträger (1) für das Steuerprogramm (3) eine CD, DVD, Smart-Card, ZIP-Disc, Magnetband ist.

21. Anzeigevorrichtung nach Anspruch 13, **dadurch gekennzeichnet, dass** die gespeicherten multimedialen Daten und/oder das Steuerprogramm (3) der darzustellenden Kataloge oder ähnliches auf dem Datenträger (1) gespeichert sind.

22. Datenträger (1) multimedialen Inhalts, der Daten aufweist, die in Ihrer Gesamtheit bewegte Bilder und Schriftzeichen von Katalogen auf einem Bildschirm eines herkömmlichen Lesegerätes (2), z.B. eines Computers, erzeugen, **gekennzeichnet durch** Steuerungsdaten, die vorbestimmte Datenbereiche des Datenträgers (1) zur Darstellung graphischer Abläufe **durch** ein interaktives Signal beliebig oft in ihrem Sinngehalt wiederholbar machen und sog. Links herstellen, die eine Verbindung zu Anbietern und Herstellern ermöglichen.
